(19) Europäisches Patentamt
European Patent Office
Office européen des brevets

(11) Veröffentlichungsnummer: **0 019 700**
**B1**

(12) # EUROPÄISCHE PATENTSCHRIFT

(45) Veröffentlichungstag der Patentschrift: **08.06.83**

(51) Int. Cl.³: **C 07 F 9/20**

(21) Anmeldenummer: **80101841.7**

(22) Anmeldetag: **05.04.80**

(54) **Verfahren zur Herstellung von Phosphorchloridthiolaten.**

(30) Priorität: **19.04.79 JP 47192/79**

(43) Veröffentlichungstag der Anmeldung: **10.12.80 Patentblatt 80/25**

(45) Bekanntmachung des Hinweises auf die Patenterteilung: **08.06.83 Patentblatt 83/23**

(84) Benannte Vertragsstaaten: **BE CH DE FR GB IT LI NL**

(56) Entgegenhaltungen:

**DE-C-1 092 464**
**DE-C-1 159 935**
**US-A-3 082 239**
**US-A-3 337 658**
**US-A-4 032 602**

**ZHUR.OBSCHEI KIM., Band 26, 1956, K.A. PETROV et al. «The Reactions of Sulfenyl Chlorides with Phosphites» Seiten 3381 bis 3384 Englische Übersetzung Seiten 3765 bis 3768**
**JOURNAL OF ORGANIC CHEMISTRY, Band 30, 1965, A.E. LIPPMANN: «O,S-Dialkyl Phosphoro-thioates», Seiten 3217-3218**

(73) Patentinhaber: **NIHON TOKUSHU NOYAKU SEIZO K.K., No.8, 2-chome, Nihonbashi Muromachi, Chuo-Ku, Tokyo (JP)**

(72) Erfinder: **Kishino, Shigeo, 3-13-22, Naka-machi, Machida-shi, Tokyo (JP)**
Erfinder: **Saito, Junichi, 3-7-12, Osawa, Mitaka-shi, Tokyo (JP)**
Erfinder: **Kume, Toyohido, 6-7-8-1108 Asahigaoka, Hino-shi Tokyo (JP)**
Erfinder: **Isono, Kunihiro, 595, Namiki-cho, Hachioji-shi, Tokyo (JP)**

(74) Vertreter: **Gremm, Joachim, Dr. et al, Bayer AG c/o Zentralbereich Patente, Marken und Lizenzen, D-5090 Leverkusen 1, Bayerwerk (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Verfahren zur Herstellung von Phosphorchloridthiolaten

Die Erfindung betrifft ein neues Verfahren zur Herstellung gewisser Phosphorchloridthiolate, die als Ausgangsmaterialien für gewisse organische Phosphatester, die als landwirtschaftliche Chemikalien wertvoll sind, verwendet werden können.

S-Methyl-O-methyl-phosphorchloridthiolat kann aus S-Methyl-phosphordichloridthiolat und Methanol erhalten werden:

$$\text{(I)} \quad CH_3S\overset{\overset{O}{\|}}{P}Cl_2 + CH_3OH \rightarrow CH_3S(CH_3O)P(O)Cl + HCl$$

Das für die vorstehende Reaktion erforderliche S-Methyl-phosphordichloridthiolat kann durch die Umlagerungsreaktion von O-Methylphosphordichloridthiolat gemäss der US-PS 3 337 658 hergestellt werden, wo die folgende Reaktion angegeben wird:

$$\text{(i)} \quad CH_3O\overset{\overset{S}{\|}}{P}Cl_2 \rightarrow CH_3S\overset{\overset{O}{\|}}{P}Cl_2$$

Da es schwierig ist, die Temperatur in der Umlagerungsreaktion einschliesslich der Fälle anderer Alkylreste als Methyl zu beherrschen, und da etwa 10% eines Dithioalkyl-S-P(S)$Cl_2$ als Nebenprodukt gebildet werden, ist dieses Verfahren für die Herstellung von O-Alkyl-S-alkylphosphorchloridthiolaten von hoher Reinheit im grosstechnischen Massstab ungeeignet.

Ferner wurde in der DE-PS 1 159 935 vorgeschlagen, Phosphordichloridthiolate nach der folgenden Reaktion herzustellen:

$$\text{(ii)} \quad R_1OPCl_2 + R_2SCl \rightarrow R_2S\overset{\overset{O}{\|}}{P}Cl_2$$

Hierin steht $R_1$ für einen Alkylrest und $R_2$ für einen Alkylrest. Auch dieses Verfahren ist für die grosstechnische Herstellung nicht vorteilhaft, weil es die Isolierung der Alkyldichlorphosphite erfordert.

Ein weiteres Verfahren zur Herstellung von Phosphorchloridthiolaten wird in Zhur. Obschei Kim. 26, 3381-3384 beschrieben. Hier verläuft die Reaktion wie folgt:

$$\text{(II)} \quad (C_2H_5O)_2PCl + C_2H_5SCl \rightarrow C_2H_5S(C_2H_5O)P(O)Cl + C_2H_5Cl$$

Es ist jedoch schwierig, nicht nur das Ausgangsmaterial, Diäthylchlorphosphit, sondern auch andere niedere Dialkylchlorphosphite von hoher Reinheit in hohen Ausbeuten zu erhalten. Um beispielsweise die genannten Dialkylchlorphosphite herzustellen, wurden die folgenden Reaktionen in «Methoden der Organischen Chemie» XII/2 50, 45 angegeben:

$$\text{(iii)} \quad 2(R_3O)_3P + PCl \rightarrow 3(R_3O)_2PCl$$

$$\text{(iv)} \quad PCl_3 + 2R_3OH \rightarrow (R_3O)_2PCl + 2HCl$$

Hierin ist $R_3$ ein Alkylrest.

In der vorstehenden Reaktion (III) werden 0,5 Mol Phosphortrichlorid pro Mol Trialkylphosphit verwendet, und bei der Reaktion (IV) werden 2 Mol des Alkohols und 2 Mol eines Dehydrochlorierungsmittels mit 1 Mol Phosphortrichlorid umgesetzt. Bei beiden Syntheseverfahren ist, da das Trialkylphosphit und das Alkyldichlorphosphit ($R_3OPCl_2$) immer als Verunreinigungen anwesend sind, die Abtrennung des gewünschten Dialkylchlorphosphits selbst durch Destillation schwierig, da es instabil ist und einen ähnlichen Dampfdruck wie die anderen Komponenten und azeotrope Eigenschaften hat. Die Folge ist eine starke Verminderung der Ausbeute. Insbesondere reagiert das Trialkylphosphit schnell mit einem Sulfenylchlorid in der anschliessenden Reaktion wie folgt:

$$(R_3O)_3P + R_4SCl \rightarrow R_4S(R_3O)_2P(O)$$

Das unerwünschte Nebenprodukt $R_4S(R_3O)_2P(O)$ vermindert stark die Reinheit und Ausbeute des gewünschten Endprodukts, des Phosphorchloridthiolats.

Gegenstand der Erfindung ist ein Verfahren zur Herstellung von Phosphorchloridthiolaten der allgemeinen Formel

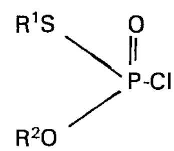

(V),

worin $R^1$ für Alkyl, Alkoxyalkyl oder Aryl, das gegebenenfalls mit Alkyl, Alkoxy oder Halogen substituiert ist, und $R^2$ für Alkyl steht. Das Verfahren ist dadurch gekennzeichnet, dass man

a) ein Trialkylphosphit der allgemeinen Formel

$$(R^2O)_3P \qquad \text{(I)},$$

in der $R^2$ die vorstehend genannte Bedeutung hat, mit der 0,65- bis 1,5fachen molaren Menge Phosphortrichlorid zu einem Gemisch eines Dialkylchlorphosphits der allgemeinen Formel

$$(R^2O)_2PCl \qquad \text{(II)},$$

in der $R^2$ die vorstehend genannte Bedeutung hat, und eines Alkyldichlorphosphits der allgemeinen Formel

$$(R^2O)PCl_2 \qquad \text{(III)},$$

in der $R^2$ die vorstehend genannte Bedeutung hat, umsetzt, das erhaltene Gemisch mit einem Sulfenylchlorid der allgemeinen Formel

$$R^1SCl \qquad \text{(IV)},$$

in der $R^1$ die vorstehend genannte Bedeutung hat, zu einem Gemisch eines Phosphorchloridthiolats der allgemeinen Formel

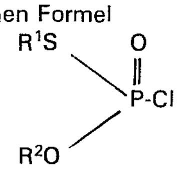

(V),

in der $R^1$ und $R^2$ die vorstehend genannten Bedeu-

tungen haben, und eines Phosphordichloridthiolats der allgemeinen Formel

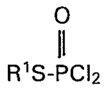

(VI),

in der $R^1$ die vorstehend genannte Bedeutung hat, umsetzt und das Phosphordichloridthiolat im Gemisch ohne Isolierung vom Gemisch mit einem Alkohol der allgemeinen Formel

$R^2OH$ (VII),

in der $R^2$ die vorstehend genannte Bedeutung hat, in Gegenwart eines Dehydrochlorierungsmittels zur Verbindung der Formel (V) umsetzt oder

b) Phosphortrichlorid mit der 1,2-bis 1,82fachen molaren Menge eines Alkohols der allgemeinen Formel

$R^2OH$ (VII),

in der $R^2$ die vorstehend genannte Bedeutung hat, in Gegenwart eines Dehydrochlorierungsmittels zu einem Gemisch eines Dialkylchlorphosphits der allgemeinen Formel

$(R^2O)_2PCl$ (II),

in der $R^2$ die vorstehend genannte Bedeutung hat, und eines Alkyldichlorphosphits der allgemeinen Formel

$(R^2O)PCl_2$ (III),

in der $R^2$ die vorstehend genannte Bedeutung hat, umsetzt, das erhaltene Gemisch mit einem Sulfenylchlorid der allgemeinen Formel

$R^1SCl$ (IV),

in der $R^1$ die vorstehend genannte Bedeutung hat, zu einem Gemisch eines Phosphorchloridthiolats der allgemeinen Formel

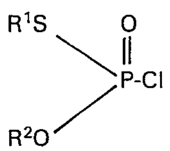

(V),

in der $R^1$ und $R^2$ die vorstehend genannten Bedeutungen haben, und eines Phosphordichloridthiolats der allgemeinen Formel

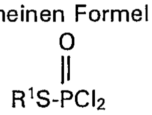

(VI),

in der $R^1$ die vorstehend genannte Bedeutung hat, umsetzt und das Phosphordichloridthiolat im Gemisch ohne Isolierung vom Gemisch mit einem Alkohol der allgemeinen Formel

$R^2OH$ (VII),

in der $R^2$ die vorstehend genannte Bedeutung hat, in Gegenwart eines Dehydrochlorierungsmittels zur Verbindung der Formel (V) umsetzt.

Es wurde somit gefunden, dass ein Gemisch des Alkyldichlorphosphits und des Dialkylchlorphosphits mit äusserst niedrigem Gehalt an Trialkylphosphit entweder durch Umsetzung des Trialkylphosphits der Formel (I) mit der 0,65- bis 1,5fachen molaren Menge Phosphortrichlorid vorzugsweise im Temperaturbereich von −30° bis 100°C oder durch Umsetzung von Phosphortrichlorid mit der 1,2- bis 1,82fachen molaren Menge eines Alkohols der Formel (VII) in Gegenwart eines Dehydrochlorierungsmittels (das vorzugsweise eine Base ist, die in äquimolarer Menge zu derjenigen des Alkohols anwesend ist) vorzugsweise im Temperaturbereich von −30° bis 100°C hergestellt werden kann.

Es wurde ferner gefunden, dass, wenn das Reaktionsgemisch des Dialkylchlorphosphits der Formel (II) und des Alkyldichlorphosphits der Formel (III) mit einem Sulfenylchlorid der Formel (IV) umgesetzt wird, bis die orange bis rötlich-orange Farbe des Sulfenylchlorids verschwindet, das Dialkylchlorphosphit und das Alkyldichlorphosphit im wesentlichen quantitativ zum gewünschten Phosphorchloridthiolat der Formel (V) bzw. zum Phosphordichloridthiolat der Formel (VI) umgewandelt werden und die Bildung von Nebenprodukten stark unterdrückt wird.

Es wurde ferner gefunden, das das Phosphorchloridthiolat und das Phosphordichloridthiolat, die in dieser Weise erhalten wurden, durch Gaschromatographie quantitativ analysiert werden können, so dass das in dieser Weise bestimmte Phosphordichloridthiolat ohne Abtrennung mit vorzugsweise der äquimolaren Menge des Alkohols der Formel (VII) und vorzugsweise der äquimolaren Menge des Dehydrochlorierungsmittels in Gegenwart eines geeigneten Lösungsmittels vorzugsweise im Temperaturbereich von −20° bis 50°C umgesetzt werden kann, wodurch das Phosphordichloridthiolat selektiv zum Endprodukt, dem Phosphorchloridthiolat, verestert wird. Unter diesen optimalen Reaktionsbedingungen wurde im wesentlichen keine Bildung des Phosphorthiolats als Folge der Umsetzung des Phosphorchloridthiolats und des Alkohols festgestellt, obwohl eine solche Reaktion durchaus hätte erwartet werden können.

Gemäss der Erfindung ist es leicht und selektiv möglich, das gewünschte Phosphorchloridthiolat durch die angegebene Folge der Reaktionen herzustellen, ohne das Reaktionsprodukt aus jeder Stufe abzutrennen. Das Verfahren gemäss der Erfindung ermöglicht die grosstechnische und vorteilhafte Herstellung der Verbindungen (V).

Die Reaktionsfolge beim Verfahren gemäss der Erfindung kann wie folgt dargestellt werden:

(i) $(R^2O)_3P + PCl_3 \rightarrow [(R^2O)_2PCl,\ R^2OPCl_2]$ Gemisch

(I) (II) (III)

oder

Base

$PCl_3 + R^2OH \rightarrow [(R^2O)_2PCl,\ R^2OPCl_2]$ Gemisch

(II) (III)

(ii) $[\ (R^2O)_2PCl,\ R^2OPCl_2\ ] + R^1SCl \rightarrow$

(II) (III) (IV)

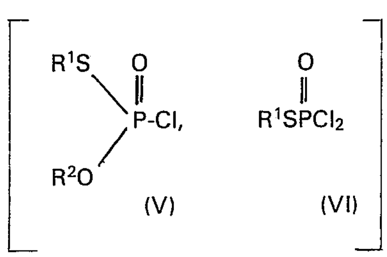

(V) (VI)

Gemisch

(iii) 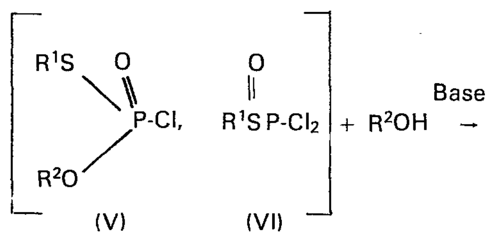


(V) (VI)

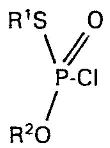

(V)

In den vorstehenden Gleichungen haben $R^1$ und $R^2$ die vorstehend genannten Bedeutungen.

$R^1$ ist vorzugsweise Methyl, Äthyl, n- oder Isopropyl, n-Butyl, Isobutyl, sek.-Butyl oder t-Butyl, n-Amyl oder Isoamyl, n-Hexyl, Methoxyäthyl, Äthoxymethyl, n-Propoxymethyl oder Isopropoxymethyl, n-Butoxymethyl, Isobutoxymethyl, sek.-Butoxymethyl oder t-Butoxymethyl, 2-Methoxyäthyl, 2-Äthoxyäthyl, 2-n-Propoxyäthyl oder 2-Isopropoxyäthyl, 2-n-, Iso-, sek.-, oder t-Butoxyäthyl, 3-Methoxypropyl, 3-Äthoxypropyl oder Phenyl oder Naphthyl, die gegebenenfalls sämtlich mit Methyl, Äthyl, n-Propyl oder Isopropyl, n-Butyl, Isobutyl, sek.-Butyl oder t-Butyl, n-Amyl oder Isoamyl, n-Hexyl, Methoxy, Äthoxy, n-Propoxy oder Isopropoxy, n-Butoxy, Isobutoxy, sek.-Butoxy oder t-Butoxy, Chlor, Fluor, Brom und Jod einfach oder mehrfach substituiert sein können.

$R^2$ ist vorzugsweise Methyl, Äthyl, n-Propyl oder Isopropyl, n-Butyl, Isobutyl, sek.-Butyl oder t-Butyl, n-Amyl oder Isoamyl oder n-Hexyl.

Beispiele von Trialkylphosphiten der Formel (I) sind Trimethylphosphit, Triäthylphosphit, Tri-n- (oder -iso-)propylphosphit und Tri-n- (iso-, sek.- oder tert.-)butylphosphit.

Beispiele von Sulfenylchloriden der Formel (IV) sind Methyl-, Äthyl-, n- (oder iso-) Propyl-, n- (iso-, sek.- oder tert.-)-Butyl, n-Amyl- oder Isoamyl- und n-Hexylsulfenylchloride; Methoxymethyl-, Äthoxymethyl-, n- (oder iso-)-Propoxymethyl-, n- (iso-, sek.- oder tert.-)Butoxymethyl-, 2-Methoxyäthyl-. 2-Äthoxyäthyl-, 2-n- (und iso-)-Propoxyäthyl-, 2-n- (iso-, sek.- oder tert.-)-Butoxyäthyl-, 3-Methoxypropyl- und 3-Äthoxypropylsulfenylchloride; 2- (3- oder 4-)-Methyl-, [Äthyl- oder n- (oder iso-)-Propyl- oder n- (iso-, sek.- und tert.-)Butyl-]phenylsulfenylchloride; 2,3- (2,4-, 2,5-, 2,6-, 3,4- oder 3,5-)-Dimethyl- [Diäthyl-, Di-n- (oder iso-)Propyl- oder Di-n- (iso-, sek.- und tert.-)Butylphenylsulfenylchloride; 2- (3- oder 4-)Methoxy- [Äthoxy-, n- oder iso-)Propoxy-, oder n- (iso-, sek.- und tert.-)Butoxy-]phenylsulfenylchloride; 2- (3- oder 4-)Chlor- (-Brom-, -Fluor- oder -Jod-) phenylsulfenylchloride; 2,3- (2,4-, 2,5-, 2,6-, 3,4- und 3,5-)Dichlor- (-Dibrom-, -Difluor- oder -Dijod-)-phenylsulfenylchloride; $\alpha$ - oder $\beta$ -Naphthylsulfenylchloride, $\alpha$ -4-Chlor- oder -Bromnaphthylsulfenylchloride; $\alpha$ -2- oder -4-Methylnaphthylsulfenylchloride und $\alpha$ -6-Chlor- (oder -Brom- oder -Methyl-) naphthylsulfenylchlorid.

Zur Durchführung des Verfahrens gemäss der Erfindung kann gegebenenfalls ein Lösungsmittel oder Verdünnungsmittel verwendet werden. Beliebige inerte Lösungsmittel oder Verdünnungsmittel können für diesen Zweck verwendet werden. Beispiele solcher Lösungsmittel und Verdünnungsmittel sind aliphatische, alicyclische und aromatische Kohlenwasserstoffe (die gegebenenfalls chloriert sein können), z.B. Hexan, Cyclohexan, Petroläther, Ligroin, Benzol, Toluol, Xylole, Methylenchlorid, Chloroform, Tetrachlorkohlenstoff, Äthylenchlorid, Trichloräthylen und Chlorbenzol; Äther, z.B. Diäthyläther, Methyläthyläther, Diisopropyläther, Dibutyläther, Propylenoxid, Dioxan und Tetrahydrofuran; Ketone, z.B. Aceton, Methyläthylketon, Methylisopropylketon und Methylisobutylketon; Nitrile, z.B. Acetonitril, Propionitril und Acrylnitril; Ester, z.B. Äthylacetat und Amylacetat; Säureamide, z.B. Dimethylformamid und Dimethylacetamid; Sulfone und Sulfoxide, z.B. Dimethylsulfoxid und Sulfolan, und organische Basen, z.B. Pyridin.

Wie bereits erwähnt, wird das Verfahren gemäss der Erfindung vorzugsweise in Gegenwart eines säurebindenden Mittels, d.h. des Dehydrochlorierungsmittels durchgeführt. Beispiele geeigneter säurebindender Mittel sind die üblichen Alkoholate und tertiären Amine, z.B. Triäthylamin, Dimethylbenzylamin, Diäthylanilin oder Pyridin.

Das Verfahren gemäss der Erfindung wird durch die folgenden Herstellungsbeispiele weiter erläutert.

*Beispiel 1*

17,9 g (0,13 Mol) Phosphortrichlorid wurden zu 33,2 g (0,2 Mol) Triäthylphosphit bei einer 0°C nicht übersteigenden Temperatur gegeben. Das Gemisch wurde 2 Stunden bei 55°C gerührt. Zum erhaltenen Gemisch von Äthyldichlorphosphit und Diäthylchlorphosphit wurde eine 35,5%ige Lösung von n-Propylsulfenylchlorid in Toluol bei −20°C gegeben, bis das Gemisch als Folge des n-Propylsulfenylchlorids eine leichte rötlich-orange Farbe annahm. Der Verbrauch von n-Propylsulfenylchlorid bei der vorstehend beschriebenen Reaktion betrug 0,325 Mol. Nachdem das Gemisch 1 Stunde bei Raumtemperatur gerührt worden war, wurde Toluol unter vermindertem Druck abdestilliert, wobei 65 g einer blassgelben Flüssigkeit erhalten wurden, deren Analyse durch Gaschromatographie ergab, dass sie die folgenden Komponenten enthielt:

| | |
|---|---|
| S-n-Propylphosphordichloridthiolat | 23,7% |
| O-Äthyl-S-n-propylphosphorchloridthiolat | 72,2% |
| O,O-Diäthyl-S-n-propylphosphorthiolat | 3,2% |
| Di-n-propyldisulfid | 0,9% |

Das Gemisch wurde in 100 ml Toluol gelöst. Die zur Reaktion mit dem S-n-Propylphosphordichloridthiolat erforderlichen stöchiometrischen Mengen von Äthanol und Triäthylamin wurden tropfenweise bei −20°C zugesetzt, und das Gemisch wurde 3 Stunden bei Raumtemperatur gerührt. Das gebildete Triäthylaminhydrochlorid wurde abfiltriert, und Toluol wurde unter vermindertem Druck abdestilliert, wobei 65 g O-Äthyl-S-n-propylphosphorchloridthiolat erhalten wurden. Die Reinheit betrug 92,9%. Daher betrug die auf den in den Ausgangmaterialien, d.h.

Triäthylphosphit und Phosphortrichlorid, verwendeten Gesamtphosphor bezogene Ausbeute 90% und die auf n-Propylsulfenylchlorid bezogene Ausbeute 92%. Das in dieser Weise erhaltene O-Äthyl-S-n-propylphosphorchloridthiolat hatte einen Siedepunkt von 67 bis 70°C/0,53 mbar.

*Beispiel 2*

41,3 g (0,3 Mol) Phosphortrichlorid wurden zu 33,2 g (0,2 Mol) Triäthylphosphit bei einer Temperatur von nicht mehr als 0°C gegeben. Das Gemisch wurde 3 Stunden bei etwa 100°C am Rückfluss erhitzt, worauf das gleiche Verfahren, das in Beispiel 1 beschrieben wurde, fortgesetzt wurde, wobei 84 g eines Gemisches, das die folgenden Komponenten enthielt, erhalten wurden:

| | |
|---|---|
| S-n-Propylphosphordichloridthiolat | 61,6% |
| O-Äthyl-S-n-propylphosphorchloridthiolat | 34,4% |
| O,O-Diäthyl-S-n-propylphosphorthiolat | 3,1% |
| Di-n-propyldisulfid | 0,9% |

Das im Gemisch enthaltene S-n-Propylphosphordichloridthiolat wurde mit stöchiometrischen Mengen von Äthanol und Triäthylamin umgesetzt, wobei 87 g O-Äthyl-S-n-propylphosphorchloridthiolat erhalten wurden. Die Reinheit betrug 95,5%. Daher betrug die auf Gesamtphosphor in den Ausgangsmaterialien bezogene Ausbeute 82%.

*Beispiel 3*

55 g (0,4 Mol) Phosphortrichlorid wurden tropfenweise zu einer Lösung von 27,6 g (0,6 Mol) Äthanol und 89,4 g (0,6 Mol) N,N-Dimethylanilin in Toluol bei einer Temperatur von nicht mehr als 0°C gegeben. Das Gemisch wurde 30 Minuten bei 85°C gerührt. Nach Abkühlenlassen auf Raumtemperatur wurde das gebildete N,N-Diäthylanilinhydrochlorid abfiltriert, wobei eine Toluollösung, die Äthyldichlorphosphit und Diäthylchlorphosphit enthielt, erhalten wurde. Anschliessend wurde der Versuch in der gleichen Weise, wie in Beispiel 1 beschrieben, fortgesetzt, wobei 72 g eines Gemisches, das die folgenden Komponenten enthielt, erhalten wurden:

| | |
|---|---|
| S-n-Propylphosphordichloridthiolat | 48,8% |
| O-Äthyl-S-n-propylphosphorchloridthiolat | 45,8% |
| O,O-Diäthyl-S-n-propylphosphorthiolat | 3,6% |
| Di-n-propyldisulfid | 1,6% |

Das im Gemisch enthaltene S-n-Propylphosphordichloridthiolat wurde mit stöchiometrischen Mengen von Äthanol und Triäthylamin umgesetzt, wobei 75 g O-Äthyl-S-n-propylphosphorchloridthiolat erhalten wurden. Die Reinheit betrug 91,1%. Daher betrug die auf Gesamtphosphor in den Ausgangsmaterialien bezogene Ausbeute 84%.

*Beispiel 4*

103 g (0,75 Mol) Phosphortrichlorid wurden zu 166 g (1 Mol) Triäthylphosphit bei einer Temperatur von nicht mehr als 0°C gegeben. Das Gemisch wurde 2 Stunden bei 55°C gerührt, wobei ein Gemisch von Äthyldichlorphosphit und Diäthylchlorphosphit erhalten wurde. Ein Teil des Gemisches wurde zu einer Lösung von 30,9 g (0,2 Mol) 2-n-Propoxyäthylsulfenylchlorid in 50 ml Toluol bei einer Temperatur von nicht mehr als 0°C gegeben, bis die rötlichorange Farbe des 2-Propoxyäthylsulfenylchlorids verschwand. Der Gesamtverbrauch an Gemisch von Äthyldichlorphosphit und Diäthylchlorphosphit bei der vorstehend beschriebenen Reaktion betrug 32,8 g. Das Gemisch wurde weitere 2 Stunden gerührt, und Toluol wurde unter vermindertem Druck abdestilliert, wobei 48 g eines Gemisches, das die folgenden Komponenten enthielt, erhalten wurden:

| | |
|---|---|
| S-2-n-Propoxyäthylphosphordichloridthiolat | 27,2% |
| O-Äthyl-S-2-n-propoxyäthylphosphorchloridthiolat | 68,0% |
| O,O-Diäthyl-S-2-n-propoxyäthylphosphorthiolat | 4,8% |

Auf die in Beispiel 1 beschriebene Weise wurde das Gemisch mit den erforderlichen Mengen von Äthanol und Triäthylamin umgesetzt, wobei 49 g O-Äthyl-S-2-n-propoxyäthylphosphorchlorid erhalten wurden. Die Reinheit betrug 93,2%. Daher betrug die auf 2-Propoxyäthylsulfenylchlorid bezogene Ausbeute 93%.

*Beispiel 5*

Das gemäss Beispiel 4 hergestellte Gemisch von Äthyldichlorphosphit und Diäthylchlorphosphit wurde zu 100 ml einer 17,9 g (0,1 Mol) p-Chlorphenylsulfenylchlorid in Tetrachlorkohlenstoff enthaltenden Lösung bei einer Temperatur von nicht mehr als 0°C gegeben, wobei 27 g eines Gemisches, das die folgenden Komponenten enthielt, erhalten wurden:

| | |
|---|---|
| S-p-Chlorphenylphosphordichloridthiolat | 15,0% |
| O-Äthyl-S-p-chlorphenylphosphorchloridthiolat | 78,6% |
| O,O-Diäthyl-S-p-chlorphenylphosphorthiolat | 6,3% |

Das Gemisch wurde mit den erforderlichen Mengen von Äthanol und Triäthylamin umgesetzt, wobei 27 g O-Äthyl-S-(4-chlorphenyl)phosphorchloridthiolat erhalten wurden. Die Reinheit betrug 93,0%. Daher betrug die auf p-Chlorphenylsulfenylchlorid bezogene Ausbeute 93%.

Nach ähnlichen Verfahren wurden die folgenden Verbindungen in hoher Reinheit und in hoher Ausbeute hergestellt:

O-Methyl-S-n-propylphosphorchloridthiolat,
Siedepunkt 68-70°C/0,53 mbar
O-Isopropyl-S-n-propylphosphorchloridthiolat,
Siedepunkt 70-73°C/0,4 mbar
O-n-Butyl-S-n-propylphosphorchloridthiolat,
O-Äthyl-S-isopropylphosphorchloridthiolat,
O-Äthyl-S-n-butylphosphorchloridthiolat,
O-Äthyl-S-sek.-butylphosphorchloridthiolat,
O-Äthyl-S-(2-methoxyäthyl)phosphorchloridthiolat,
O-Äthyl-S-(2-äthoxyäthyl)phosphorchloridthiolat,
O-Äthyl-S-(2-isopropoxyäthyl)phosphorchloridthiolat,
O-Äthyl-S-(2-n-butoxyäthyl)phosphorchloridthiolat,
O-Äthyl-S-phenylphosphorchloridthiolat,
Siedepunkt 116-119°C/0,4 mbar
O-n-Butyl-S-äthylphosphorchloridthiolat,
Siedepunkt 89-100°C/0,8 mbar und
O-Isobutyl-S-äthylphosphorchloridthiolat,
Siedepunkt 79-81°C/0,53 mbar.

*Vergleichsbeispiel 1*

Nach einem von H.G. Cook et al in J.C.S. 1949, 2921-2927, beschriebenen Verfahren wurden 27,5 g (0,2 Mol) Phosphortrichlorid zu 66,4 g (0,4 Mol)

Triäthylphosphit gegeben. Das Gemisch wurde sachte erhitzt und 30 Minuten am Rückfluss erhitzt, wobei Diäthylchlorphosphit erhalten wurde, dem eine Lösung von 66,3 g (0,6 Mol) n-Propylsulfenylchlorid in Toluol bei $-10°C$ zugesetzt wurde. Das Gemisch wurde 1 Stunde bei Raumtemperatur gerührt. Toluol wurde abdestilliert, wobei 121 g eines Reaktionsgemisches, das die folgenden Komponenten enthielt, erhalten wurden:

| | |
|---|---|
| S-n-Propylphosphorchloridthiolat | 8,9% |
| O-Äthyl-S-n-propylphosphorchloridthiolat | 69,9% |
| O,O-Diäthyl-S-n-propylphosphorthiolat | 15,8% |
| Di-n-propyldisulfid | 5,4% |

Das Gemisch wurde mit den erforderlichen Mengen von Äthanol und Triäthylamin auf die in Beispiel 1 beschriebene Weise umgesetzt, wobei 121 g O-Äthyl-S-n-propylphosphorchloridthiolat erhalten wurden. Die Reinheit betrug 78,1%. Daher betrug die sowohl auf Gesamtphosphor bezogene als auch die auf n-Propylsulfenylchlorid bezogene Ausbeute 78%.

*Vergleichsbeispiel 2*

Auf die in Beispiel 2 beschriebene Weise wurde ein Gemisch von Diäthylchlorphosphit und Äthyldichlorphosphit aus 33,2 g (0,2 Mol) Triäthylphosphit und 41,3 g (0,3 Mol) Phosphortrichlorid hergestellt. Eine Lösung von 55,3 g (0,5 Mol) n-Propylsulfenylchlorid in Toluol wurde diesem Gemisch tropfenweise bei $-20°C$ zugesetzt. Das Gemisch wurde 2 Stunden bei Raumtemperatur gerührt, worauf Toluol unter vermindertem Druck abdestilliert wurde, wobei 88 g eines Reaktionsgemisches, das die folgenden Komponenten enthielt, erhalten wurden:

| | |
|---|---|
| S-n-Propylphosphorchloridthiolat | 57,6% |
| O-Äthyl-S-n-propylphosphorchloridthiolat | 33,9% |
| O,O-Diäthyl-S-n-propylphosphorthiolat | 2,9% |
| Di-n-propyldisulfid | 56,6% |

Das Gemisch wurde dann mit den erforderlichen Mengen von Äthanol und Triäthylamin umgesetzt, wobei 89 g O-Äthyl-S-n-propylphosphorchloridthiolat erhalten wurden. Die Reinheit betrug 89,3%. Daher betrug die auf Gesamtphosphor bezogene Ausbeute 78%.

**Patentansprüche**

1. Verfahren zur Herstellung von Phosphorchloridthiolaten der allgemeinen Formel

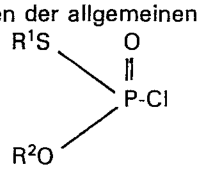
(V),

in der $R^1$ für Alkyl, Alkoxy oder Aryl steht, das gegebenenfalls mit Alkyl, Alkoxy oder Halogen substituiert ist, und $R^2$ für Alkyl steht, dadurch gekennzeichnet, dass man

a) ein Trialkylphosphit der allgemeinen Formel

$(R^2O)_3P$ (I),

in der $R^2$ die oben angegebene Bedeutung hat, mit der 0,65- bis 1,5fachen molaren Menge Phosphortrichlorid zu einem Gemisch eines Dialkylchlorphosphits der allgemeinen Formel

$(R^2O)_2PCl$ (II),

in der $R^2$ die oben angegebene Bedeutung hat, und eines Alkyldichlorphosphits der allgemeinen Formel

$(R^2O)PCl_2$ (III),

in der $R^2$ die oben angegebene Bedeutung hat, umsetzt, das erhaltene Gemisch mit einem Sulfenylchlorid der allgemeinen Formel

$R^1SCl$ (IV),

in der $R^1$ die oben angegebene Bedeutung hat, zu einem Gemisch eines Phosphorchloridthiolats der allgemeinen Formel

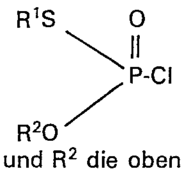
(V),

in der $R^1$ und $R^2$ die oben angegebenen Bedeutungen haben, und eines Phosphordichloridthiolats der allgemeinen Formel

O
||
$R^1S\text{-}PCl_2$ (VI),

in der $R^1$ die oben angegebene Bedeutung hat, umsetzt und das Phosphordichloridthiolat im Gemisch ohne Isolierung vom Gemisch mit einem Alkohol der allgemeinen Formel

$R^2OH$ (VII),

in der $R^2$ die oben angegebene Bedeutung hat, in Gegenwart eines Dehydrochlorierungsmittels zur Verbindung der Formel (V) umsetzt oder

b) Phosphortrichlorid mit der 1,2-bis 1,8fachen molaren Menge eines Alkohols der allgemeinen Formel

$R^2OH$ (VII),

in der $R^2$ die oben angegebene Bedeutung hat, in Gegenwart eines Dehydrochlorierungsmittels zu einem Gemisch eines Dialkylchlorphosphits der allgemeinen Formel

$(R^2O)_2PCl$ (II),

in der $R^2$ die oben angegebene Bedeutung hat, und eines Alkyldichlorphosphits der allgemeinen Formel

$(R^2O)PCl_2$ (III),

in der $R^2$ die oben angegebene Bedeutung hat, umsetzt, das erhaltene Gemisch mit einem Sulfenylchlorid der allgemeinen Formel

$R^1SCl$ (IV),

in der $R^1$ die oben angegebene Bedeutung hat, zu einem Gemisch eines Phosphorchloridthiolats der allgemeinen Formel

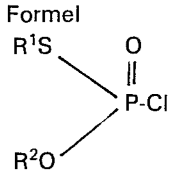
(V),

in der $R^1$ und $R^2$ die oben angegebenen Bedeutungen haben, und eines Phosphordichloridthiolats der allgemeinen Formel

O
||
$R^1S\text{-}PCl_2$ (VI),

in der $R^1$ die oben angegebene Bedeutung hat, umsetzt und das Phosphordichloridthiolat im Gemisch ohne Isolierung vom Gemisch mit einem Alkohol der allgemeinen Formel

$R^2OH$ (VII),

in der $R^2$ die oben angegebene Bedeutung hat, in Gegenwart eines Dehydrochlorierungsmittels zur Verbindung der Formel (V) umsetzt.

2. Verfahren nach Anspruch 1, dadurch gekennzeichnet, dass man das Sulfenylchlorid in einer Menge verwendet, die den Gesamtmolen von Dialkylchlorphosphit und Alkyldichlorphosphit, die im Gemisch enthalten sind, entspricht.

3. Verfahren nach Anspruch 1 und 2, dadurch gekennzeichnet, dass man die Umsetzung des Trialkylphosphits (I) oder des Alkohols (VII) mit dem Phosphortrichlorid bei einer Temperatur von $-30°$ bis $+100°C$ durchführt.

4. Verfahren nach Anspruch 1 bis 3, dadurch gekennzeichnet, dass man den Alkohol mit der äquimolaren Menge des Phosphordichloridthiolats in Gegenwart der äquimolaren Menge des Dehydrochlorierungsmittels bei einer Temperatur im Bereich von $-20°$ bis $+50°C$ umsetzt.

5. Verfahren nach Anspruch 1 bis 4, dadurch gekennzeichnet, dass man als Dehydrochlorierungsmittel ein Alkoholat oder ein tertiäres Amin verwendet.

6. Verfahren nach Anspruch 1 bis 5, dadurch gekennzeichnet, dass man die Reaktionen in einem inerten Lösungsmittel oder Verdünnungsmittel durchführt.

7. Verfahren nach Anspruch 1 bis 6, dadurch gekennzeichnet, dass man ein Produkt der Formel (V) herstellt, in der

$R^1$ für Methyl, Äthyl, n-Propyl oder Isopropyl, n-Butyl, Isobutyl, sek.- oder tert.-Butyl, n-Amyl oder Isoamyl, n-Hexyl, Methoxyäthyl, Äthoxymethyl, n-Propoxymethyl oder Isopropoxymethyl, n-, iso-, sek.- oder tert.-Butoxymethyl, 2-Methoxyäthyl, 2-Äthoxyäthyl, 2-n- oder 2-Isopropoxyäthyl, 2-n-, 2-iso-, 2-sek.- oder 2-tert.-Butoxyäthyl, 3-Methoxypropyl, 3-Äthoxypropyl oder Phenyl oder Naphthyl steht, die jeweils gegebenenfalls mit Methyl, Äthyl, n-Propyl oder Isopropyl, n-, iso-, sek.- oder t-Butyl, n- oder Isoamyl, n-Hexyl, Methoxy, Äthoxy, n- oder Isopropoxy, iso-, sek.- oder t-Butoxy, Chlor, Fluor, Brom und Jod einfach oder mehrfach substituiert sein können, und

$R^2$ für Methyl, Äthyl, n-Propyl oder Isopropyl, n-, iso-, sek.- oder t-Butyl, n-Amyl oder Isoamyl oder n-Hexyl steht.

## Claims

1. Process for the production of phosphoro chloride thiolates of the general formula

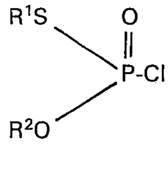 (V),

in which $R^1$ represents alkyl, alkoxyalkyl or aryl, which is optionally substituted by alkyl, alkoxy or halogen, and $R^2$ represents alkyl, characterised in that

a) a trialkyl phosphite of the general formula

$(R^2O)_3P$ (I),

in which $R^2$ has the meaning indicated above, is reacted with 0.65 to 1.5 times the molar amount of phosphorus trichloride to produce a mixture of a dialkyl chlorophosphite of the general formula

$(R^2O)_2PCl$ (II),

in which $R^2$ has the meaning indicated above, and an alkyl dichlorophosphite of the general formula

$(R^2O)PCl_2$ (III),

in which $R^2$ has the meaning indicated above, the resulting mixture is reacted with a sulphenyl chloride of the general formula

$R^1SCl$ (IV),

in which $R^1$ has the meaning indicated above, to produce a mixture of a phosphoro chloride thiolate of the general formula

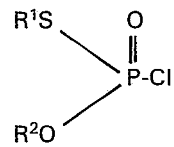 (V),

in which $R^1$ and $R^2$ have the above mentioned meanings, and a phosphoro dichloride thiolate of the general formula

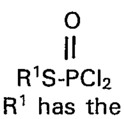 (VI),

in which $R^1$ has the meaning indicated above and the phosphoro dichloride thiolate in the mixture is reacted, without isolation from the mixture, with an alcohol of the general formula

$R^2OH$ (VII),

in which $R^2$ has the meaning indicated above, in the presence of a dehydrochlorinating agent to produce the compound of the formula (V), or

b) phosphorus trichloride is reacted with 1.2 to 1.8 times the molar amount of an alcohol of the general formula

$R^2OH$ (VII),

in which $R^2$ has the meaning indicated above, in the presence of a dehydrochlorinating agent to produce a mixture of a dialkyl chlorophosphite of the general formula

$(R^2O)_2PCl$ (II),

in which $R^2$ has the meaning indicated above, and an alkyl dichlorophosphite of the general formula

$(R^2O)PCl_2$ (III),

in which $R^2$ has the meaning indicated above, the resulting mixture is reacted with a sulphenyl chloride of the general formula

$R^1SCl$ (IV),

in which $R^1$ has the meaning indicated above, to produce a mixture of a phosphoro chloride thiolate of the general formula

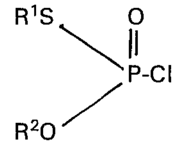 (V),

in which $R^1$ and $R^2$ have the meanings indicated above, and a phosphoro dichloride thiolate of the general formula

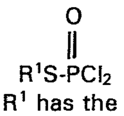 (VI),

in which $R^1$ has the meaning indicated above, and the phosphoro dichloride thiolate in the mixture is reacted, without isolation from the mixture, with an alcohol of the general formula

$R^2OH$ (VII),

in which $R^2$ has the meaning indicated above, in the presence of a dehydrochlorinating agent to produce the compound of the formula (V).

2. Process according to Claim 1, characterised in that the sulphenyl chloride is used in an amount which corresponds to the total moles of dialkyl chlorophosphite and alkyl dichlorophosphite contained in the mixture.

3. Process according to Claim 1 and 2, characterised in that the reaction of the trialkyl phosphite (I) or the alcohol (VII) with the phosphorus trichloride is carried out at a temperature of $-30°$ to $+100°C$.

4. Process according to Claim 1 to 3, characterised in that the alcohol is reacted with the equimolar amount of the phosphoro dichloride thiolate in the presence of the equimolar amount of the dehydrochlorinating agent at a temperature in the range from $-20°$ to $+50°C$.

5. Process according to Claim 1 to 4, characterised in that the dehydrochlorinating agent used is an alcoholate or a tertiary amine.

6. Process according to Claim 1 to 5, characterised in that the reactions are carried out in an inert solvent or diluent.

7. Process according to Claim 1 to 6, characterised in that a product of the formula (V) is prepared in which

$R^1$ represents methyl, ethyl, n-propyl or isopropyl, n-butyl, isobutyl, sec- or tert-butyl, n-amyl or isoamyl, n-hexyl, methoxyethyl, ethoxymethyl, n-propoxymethyl or isopropoxymethyl, n-, iso-, sec- or tert-butoxymethyl, 2-methoxyethyl, 2-ethoxyethyl, 2-n- or 2-iso-propoxyethyl, 2-n-, 2-iso-, 2-sec or 2-tert-butoxyethyl, 3-methoxypropyl, 3-ethoxypropyl or phenyl or naphthyl, each of which may optionally be monosubstituted or polysubstituted by methyl, ethyl, n-propyl or isopropyl, n-, iso-, sec- or t-butyl, n- or isoamyl, n-hexyl, methoxy, ethoxy, n- or isopropoxy, n-, iso-, sec- or t-butoxy, chlorine, fluorine, bromine or iodine, and

$R^2$ represents methyl, ethyl, n-propyl or isopropyl, n-, iso-, sec- or t-butyl, n-amyl or isoamyl or n-hexyl.

**Revendications**

1. Procédé de fabrication de phosphorochlorothiolates de formule générale:

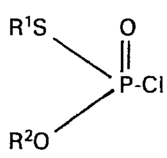 (V),

dans laquelle $R^1$ représente un alcoyle, alcoxyalcoyle ou aryle qui peut éventuellement être substitué par un alcoyle, alcoxy ou de l'halogène, et $R^2$ représente un alcoyle, caratérisé en ce que

a) on fait réagir un phosphite de trialcoyle de formule générale:

$(R^2O)_3P$ (I),

dans laquelle $R^2$ a la signification indiquée plus haut, avec 0,65 à 1,5 fois la quantité molaire de trichlorure de phosphore pour obtenir un mélange d'un chlorophosphite de dialcoyle de formule générale:

$(R^2O)_2PCl$ (II),

dans laquelle $R^2$ a la signification indiquée plus haut, et d'un dichlorophosphite d'alcoyle de formule générale:

$(R^2O)PCl_2$ (III),

dans laquelle $R^2$ a la signification indiquée plus haut, en ce qu'on fait réagir le mélange obtenu avec un chlorure de sulfényle de formule générale:

$R^1SCl$ (IV),

dans laquelle $R^1$ a la signification indiquée plus haut, pour obtenir un mélange d'un phosphorochlorothiolate de formule générale:

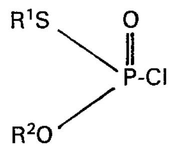 (V),

dans laquelle $R^1$ et $R^2$ ont les significations indiquées plus haut, et d'un phosphorodichlorothiolate de formule générale:

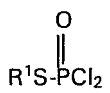 (VI),

dans laquelle $R^1$ a la signification indiquée plus haut, et en ce que le phosphorodichlorothiolate dans le mélange, sans isolation à partir du mélange, est mis à réagir avec un alcool de formule générale:

$R^2OH$ (VII),

dans laquelle $R^2$ a la signification indiquée plus haut, en présence d'un agent de déshydrochloruration pour obtenir le composé de formule (V), ou bien

b) on fait réagir du trichlorure de phosphore avec 1,2 à 1,8 fois la quantité molaire d'un alcool de formule générale:

$R^2OH$ (VII),

dans laquelle $R^2$ a la signification indiquée plus haut, en présence d'un agent de déshydrochloruration pour obtenir un mélange d'un chlorophosphite de dialcoyle de formule générale:

$(R^2O)_2PCl$ (II),

dans laquelle $R^2$ a la signification indiquée plus haut, et d'un dichlorophosphite d'alcoyle de formule générale:

$(R^2O)PCl_2$ (III),

dans laquelle $R^2$ a la signification indiquée plus haut, en ce qu'on fait réagir le mélange obtenu avec un chlorure de sulfényle de formule générale:

$R^1SCl$ (IV),

dans laquelle $R^1$ a la signification indiquée plus haut, pour obtenir un mélange d'un phosphorochlorothiolate de formule générale:

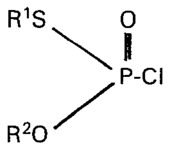

(V),

dans laquelle $R^1$ et $R^2$ ont les significations indiquées plus haut, et d'un phosphorodichlorothiolate de formule générale:

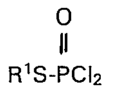

(VI),

dans laquelle $R^1$ a la signification indiquée plus haut, et en ce qu'on fait réagir le phosphorodichlorothiolate dans le mélange, sans isolation à partir du mélange, avec un alcool de formule générale:

$R^2OH$ (VII),

dans laquelle $R^2$ a la signification indiquée plus haut, en présence d'un agent de déshydrochloruration pour obtenir le composé de formule (V).

2. Procédé selon la revendication 1, caractérisé en ce qu'on utilise le chlorure de sulfényle en une quantité qui correspond aux moles totales de chlorophosphite de dialcoyle et de dichlorophosphite d'alcoyle qui sont contenus dans le mélange.

3. Procédé selon les revendications 1 et 2, caractérisé en ce qu'on exécute la réaction du phosphite de trialcoyle (I) ou de l'alcool (VII) avec le trichlorure de phosphore à une température de −30° à +100°C.

4. Procédé selon les revendications 1 à 3, caractérisé en ce qu'on fait réagir l'alcool avec la quantité équimolaire du phosphorodichlorothiolate en présence de la quantité équimolaire de l'agent de déshydrochloruration à une température dans l'intervalle de −20° à +50°C.

5. Procédé selon les revendications 1 à 4, caractérisé en ce qu'on utilise comme agent de déshydrochloruration un alcoolate ou une amine tertiaire.

6. Procédé selon les revendications 1 à 5, caractérisé en ce qu'on exécute les réactions dans un solvant ou un diluant inerte.

7. Procédé selon les revendications 1 à 6, caractérisé en ce qu'on prépare un produit de formule (V), dans laquelle

$R^1$ représente un méthyle, éthyle, n-propyle ou isopropyle, n-butyle, isobutyle, sec- ou t-butyle, n-amyle ou isoamyle, n-hexyle, méthoxyéthyle, éthoxyméthyle, n-propoxyméthyle ou isopropoxyméthyle, n-, iso-, sec- ou t-butoxyméthyle, 2-méthoxyéthyle, 2-éthoxyéthyle, 2-n- ou 2-isopropoxyéthyle, 2-n-, 2-iso-, 2-sec- ou 2-t-butoxyéthyle, 3-méthoxypropyle, 3-éthoxypropyle ou phényle ou naphthyle, qui peuvent être chacun éventuellement substitués une ou plusieurs fois avec un méthyle, éthyle, n-propyle ou isopropyle, n-, iso-, sec- ou t-butyle, n- ou isoamyle, n-hexyle, méthoxy, éthoxy, n- ou isopropoxy, n-, iso-, sec- ou t-butoxy, chlore, fluor, brome et iode, et

$R^2$ représente un méthyle, éthyle, n-propyle ou isopropyle, n-, iso-, sec- ou t-butyle, n-amyle ou isoamyle ou n-hexyle.